Europäisches Patentamt

European Patent Office

Office européen des brevets

(19)

(11) Veröffentlichungsnummer: **0 333 916**

**A2**

(12) **EUROPÄISCHE PATENTANMELDUNG**

(21) Anmeldenummer: 88115520.4

(22) Anmeldetag: 22.09.88

(51) Int. Cl.⁴: **G05D 23/24**

(30) Priorität: 22.03.88 DE 3809540

(43) Veröffentlichungstag der Anmeldung:
27.09.89 Patentblatt 89/39

(84) Benannte Vertragsstaaten:
**CH DE FR GB LI**

(71) Anmelder: **HERAEUS-WITTMANN GMBH**
**Heraeusstrasse 12-14**
**D-6450 Hanau/Main(DE)**

(72) Erfinder: **Lang, Raimund**
**Friedenstrasse 25**
**D-8755 Alzenau 2(DE)**

(74) Vertreter: **Heinen, Gerhard, Dr.**
**Heraeus Holding GmbH Heraeusstrasse**
**12-14**
**D-6450 Hanau am Main(DE)**

(54) **Verfahren zur Temperaturregelung von Widerstandsheizleitern.**

(57) Zur Regelung der Tempertur von Widerstandsheizleitern ist ein mit Regler und Stellglied versehener Heizleiterkreis vorgesehen, bei dem die Temperatur am Widerstandsheizleiter selbst durch die aus Temperaturänderung und Temperaturkoeffizient errechenbare Widerstandsänderung gegenüber dem Kaltwiderstand ermittelt wird. Die Ermittlung erfolgt durch Messung des Heizleiterstromes unter Vorgabe einer konstanten Spannung bzw. unter Messung der Versorgungsspannung. Die Bestimmung des Heizleiterwiderstandes und somit der Temperatur wird dabei unter Berücksichtigung der Widerstandswerte des Strommessers und Stellgliedes durchgeführt; der Wert des Heizleiterwiderstandes wird in ein digitales Signal umgewandelt, das als Adresse in einem logischen Speicher ein Befehlswort zur Ansteuerung des Stellgliedes abruft.

EP 0 333 916 A2

## Verfahren zur Temperaturregelung von Widerstandsheizleitern

Die Erfindung betrifft ein Verfahren zur Regelung einer vorgegebenen Temperatur eines Widerstandsheizleiters unter Messung des einen elektrischen Widerstand durchfließenden Stromes bei gleichzeitiger Ermittlung des zugehörigen Spannungsabfalles, wonach aus den gemessenen Werten ein Stellsignal zur Regelung des Stromes im Widerstandsheizleiter mittels eines Stellgliedes abgeleitet wird sowie eine Schaltungsanordnung zur Durchführung des Verfahrens.

Es ist bekannt zur Temperaturregelung von Widerstandsheizleitern die Temperature mittels eines metallischen Widerstandsthermometers, dessen Widerstand bei Temperaturänderung sich nach einem vorgegebenen Temperaturkoeffizient $\alpha$ ändert, wobei folgende Beziehung gilt
$$\Delta R = R_H \times \alpha \times \Delta\vartheta$$
zu messen.

Der Temperaturkoeffizient $\alpha$ beträgt beispielsweise für Platin 0,0039/grd, während er für Konstantanmaterial im Bereich von ca. $5 \cdot 10^{-6}$/grd liegt.

Als problematisch erweist sich insbesondere bei kleineren Elektrowärmevorrichtungen, beispielsweise Heizmatten, Heizbändern oder Heizkabeln für Laboratoriumszwecke die verhältnismäßig aufwendige Regelungstechnik mit ihren zusätzlichen Sensoren und Reglern sowie den zugehörigen Signal- bzw. Steuerleitungen; dies kann insbesondere bei einer Vielzahl kleiner Elektrowärmegeräte zu einem hohen finanziellen und technischen Aufwand führen, das gilt insbesondere im Falle einer fest vorgegebenen Temperaturkennlinie im zeitlichen Ablauf, nach der die Elektrowärmevorrichtungen aufgeheizt werden sollen.

Die Erfindung stellt sich die Aufgabe, für Elektrowärmegeräte mit einem zeitlich vorgegebenen Temperaturverlauf eine kostengünstige und technisch einfache Wärmeregelung zu schaffen. Dabei soll die Regelung mit ihrem Stellglied in ein einziges Bauteil intergrierbar sein, das dann Teil der Heizleiterzuleitung ist.

Die Aufgabe wird erfindungsgemäß durch die kennzeichnenden Merkmale des Anspruchs 1 und des Anspruchs 4 gelöst.

In einer bevorzugten Ausführungsform bilden Heizleiter, Strommesser und Stellglied eine Reihenschaltung, wobei Strommesser und Stellglied sich in einem Regelkreis befinden, der einen an den Strommesser angeschlossenen Analog/Digitalwandler mit nachgeschalteten logischen Speicher aufweist, wobei der logische Speicher mit dem Stellglied verbunden ist. Weitere vorteilhafte Ausgestaltungen des Gegenstandes sind in den Unteransprüchen angegeben.

Als vorteilhaft erweist sich nach der Erfindung die unproblematische Integration des Regelkreises in die Zuleitung des Heizwiderstandes. Weiterhin kann zum jeweiligen Anwendungsfall ein optimales Regelverhalten durch entsprechende Programmierung eines ROM-Bausteines als logischer Speicher erreicht werden.

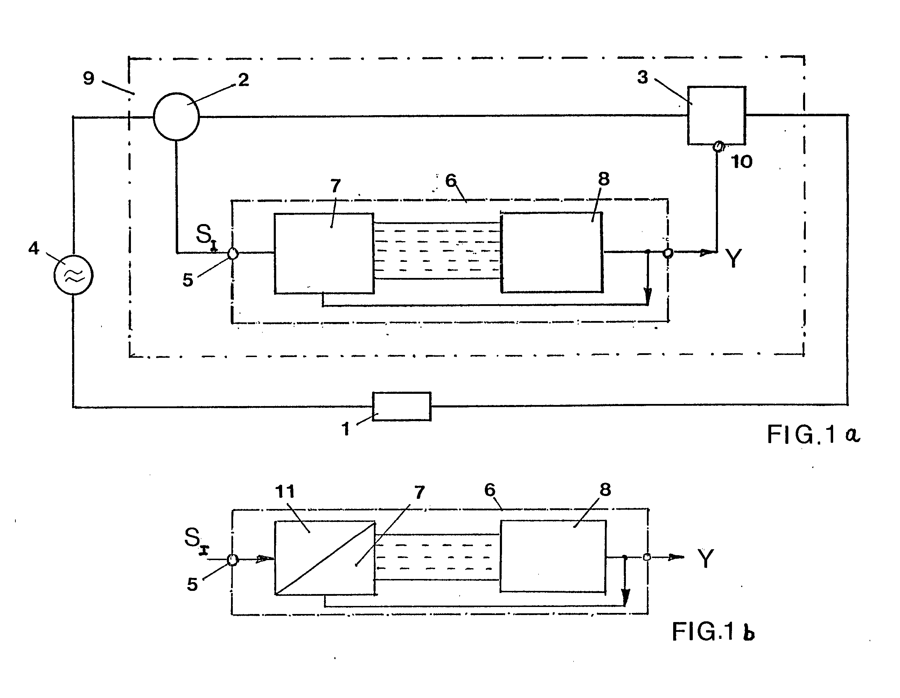

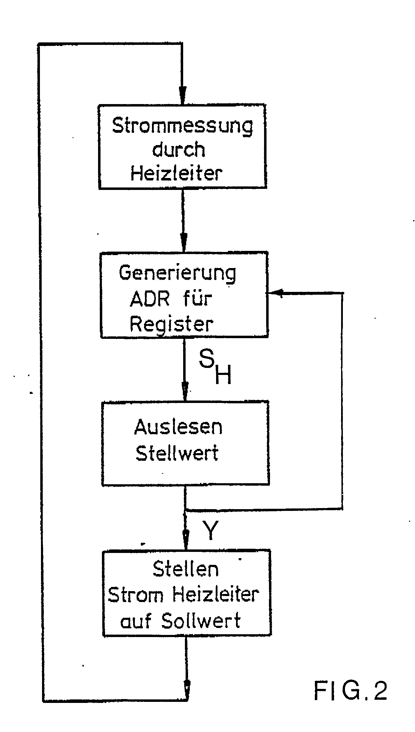

Im folgenden ist der Gegenstand der Erfindung anhand der Figuren 1a, 1b und 2 näher erläutert; dabei zeigt Figur 1a im Blockschaltbild eine zur Durchführung des Verfahrens geeignete Schaltungsanordnung, während in Figur 1b im Ausschnitt die bevorzugte Ausführungsform mit Analog/Digital-Wandler am Eingang des Reglers dargestellt ist. Zwecks besserer Übersicht wurde die Stellsignalleitung für die Stellgröße einfach dargestellt, obwohl es sich hier um eine Leitung zur parallelen Übertragung von Digitalwerten handelt, wie sie zwischen Rechner 7 und logischem Speicher 8 dargestellt ist.

Gemäß Figur 1a bilden Heizleiter 1, Strommesser 2 und Stellglied 3 eine Reihenschaltung, die an Spannungsquelle 4 angeschlossen ist; Strommesser 2 ist mit dem Eingang 5 von Regler 6 verbunden, welcher ebenso wie das vom Regler 6 betätigte Stellglied 3 über eine zwecks besserer Übersicht nicht dargestellte Versorgungsleitung mit der Spannungsquelle 4 verbunden ist. Durch Quotientenbildung der Signale von Versorgungsspannung $S_U$ und dem im Strommesser 2 ermitteltem Strom $S_I$ wird ein Signal des Widerstandswertes $S_R$ des gesamten Heizleiterkreises ermittelt, wobei durch Subtraktion der bekannten Widerstände von Strommesser 2 und Stellglied 3 der temperaturabhängige Widerstand des Heizleiters $R_H(\vartheta)$ errechnet wird und als Signal $S_H$ ausgegeben wird. Zwischen dem als Regelgröße ermittelten Heizleiterwiderstand $S_H$ und der mittleren Heizleitertemperatur besteht folgende Beziehung $S_H = (R_H + \alpha \cdot \Delta\vartheta) \cdot P$, dabei ist $R_H$ der bei 0 °C ermittelte Widerstand des Heizleiters, während $\alpha$ als Temperaturkoeffizient die prozentuale Veränderung des Widerstandes pro Grad Celsius wiedergibt; P ist ein Proportionalfaktor. Der Heizleiter besteht vorzugsweise aus einer Konstantanmetall-Legierung; es ist jedoch auch möglich, einen Heizleiter aus Platin bzw. einer Platinlegierung einzusetzen.

Nach einem für den jeweiligen Anwendungsfall vorgegebenen Regelverhalten und einer vorgegebenen Parametierung des Heizleiters 1 werden aufgrund des gemessenen Heizleiterwiderstandes $S_H$ Stellwerte Y erzeugt, die den vorgegebenen zeitlichen Temperaturerlauf steuern. Diese Stellwerte Y werden vorab ermittelt und anschließend unter abrufbaren Adressen in einem logischen Speicher 8 abgespeichert.

Dem mit einem Dividierer versehenen Eingang 5 des Reglers 6 wird das vom Strommesser abgegebene Signal $S_I$ zugeführt, wobei im Dividierer das dem Widerstand des Heizleiterkreises entsprechende Signal $S_R$ durch Quotientenbildung des Versorgungsspannungssignals $S_U$ mit dem Signal $S_I$ erzeugt wird:

$$S_R = \frac{S_U}{S_I}$$

Der Dividierer kann dabei nach der üblichen Operationsverstärkertechnik der Analogmultiplizierer aufgebaut sein, es ist jedoch auch möglich, die Signale $S_U$ und $S_I$ durch A/D-Wandler in Digitalwerte umzuwandeln und die Division im digital arbeitenden Rechenwerk des Reglers durchzuführen. Die Subtraktion der Widerstände von Strommesser 2 und Stellglied 3 kann dabei ebenfalls durch Analog-Substrahierer mit Operationsverstärker oder im Falle eines digitalen Rechenwerkes durch eine arithmetische Substraktion erfolgen. Der Widerstand des Strommessers 2 ist dabei eine vorgegebene konstante Größe, während der Widerstand des Stellgliedes 3 aus dem vom Regler 6 abgegebenen Stellsignal Y abgeleitet wird.

Im Regler 6 befindet sich neben der schon angegebenen Rechneranordnung 7 zur Ermittlung des Widerstandswertes des Heizleiters ein logischer Speicher 8, der neben dem digital gespeicherten Stellwert eine Vielzahl von Adressen aufweist, die vom Rechner 7 aufgerufen werden können. Falls der Rechner im Analogverfahren arbeitet, weist er an seinem Ausgang einen A/D-Wandler auf, um das Signal des Heizleiterwiderstandes $S_H$ in einen digitalen Wert umzuwandeln, der als Adresse für den logischen Speicher 8 dient. Strommesser 2, Stellglied 3 und Regler 6 bilden zusammen mit ihren Steuer- und Versorgungsleitungen einen zusammenhängenden Baustein 9, der in der Zuleitung des Kabels integriert ist. Im Falle einer digital arbeitenden Rechneranordnung 7 mit vorgeschaltetem A/D-Wandler 11 gemäß Figur 1b kann des Istwert direkt dem Rechenwerk 7 entnommen werden. Aus dem Istwert wird ein digitales Signal erzeugt, das einer Adresse des logischen Speichers 8 entspricht und ein der Adresse entsprechendes Befehlswort vom Speicher 8 als Stellsignal Y ausgegeben. Das Stellsignal Y kann dabei entweder direkt als Digitalwert an den Steuereingang 10 des Stellgliedes 3 weitergeleitet werden oder über einen hier zwecks besserer Übersicht nicht dargestellten D/A-Wandler in ein Analogsignal zur Steuerung des Stellgliedes umgewandelt werden.

In der Praxis hat es sich als ausreichend erwiesen, die aus dem Wechselspannungsnetz entnommene Versorgungsspannung als Konstante vorzugeben, so daß nur noch das vom Strommesser 2 ermittelte Stromsignal $S_I$ und der Widerstand des Stellgliedes 3 (d.h. aus Stellsignal Y abgeleitet) bei der Ermittlung des Heizleiterwiderstandes zugrundegelegt werden. Das Stromsignal $S_I$ wird dabei sofort über einen A/D-Wandler in einen Digitalwert umgewandelt, aus dem unter Korrektur mit dem digitalen Stellwert Y die Adresse für den logischen Speicher abgeleitet wird. Das zugehörige Flußdiagramm ist in Figur 2 dargestellt, wobei die Rückführung des Stellwertes Y in den Regler-Eingang zwecks Ermittlung des wahren Heizleiterwiderstandes symbolisch dargestellt ist.

Der zugehörige Regelkreis besteht aus Regler 6 und Stellglied 3, nach dem das Stromsignal $S_I$ praktisch als Kehrwert der Regelgröße $S_H$ angesehen werden kann, wobei noch der Stellwert Y bzw. eine Funktion $F = f(Y)$ zu berücksichtigen ist.

Im eigentlichen Regelkreis liegt am Eingang des Reglers das Stromsignal $S_I$ an, welches durch einen A/D-Wandler 11 in einen Digitalwert umgewandelt wird, dessen Kehrwert dem Gesamtwiderstand des Heizleiterkreises entspricht. Die Bildung des Kehrwertes im Rechenwerk 7 entspricht der Quotientenbildung $S_U/S_I$ und damit dem Gesamtwiderstand, wobei anschließend der Differenzwert zwischen dem Quotienten $S_U/S_I$ und $1/Y$ bzw. einem Funktionswert $F = f(Y)$ gebildet wird, um zum Wert $S_H$ des Heizleiterwiderstandes zu gelangen. Dieser Wert bildet eine Digitalwert, der als Adresse in den logischen Speicher 8 des Reglers 6 gelangt und das als Stellsignal Y dienende Befehlswort auslöst. Die Adresse entspricht der jeweiligen Stellgröße, wobei das Befehlswort das erwünschte dynamische Regelverhalten des Systems, beispielsweise durch Vorgabe von Proportionalverstellung, Nachstellzeit und Vorhaltezeit vorgibt. Falls keine Regelabweichung vorliegt, wird ein Befehlswort mit dem Wert "Null" ausgegeben.

## Ansprüche

1. Verfahren zur Regelung einer vorgegebenen Temperatur eines Widerstandsheizleiters unter Messung des einen elektrischen Widerstand durchfließenden Stromes bei gleichzeitiger Ermittlung des zugehörigen Spannungsabfalles, wonach aus den gemessenen Werten ein Stellsignal zur Regelung des Stromes im Widerstandsheizleiter mittels eines Stellgliedes abgeleitet wird, dadurch gekennzeichnet, daß der allein vom Heizstrom durchflossene Widerstandsheizleiter (1) als Widerstand zu der Messung verwendet wird, daß ein dem Widerstandswert des Heizleiters (1) entsprechendes digitales Signal gebildet wird, welches als Adresse aus einem logischen Speicher (8) mit mehreren vorgegebenen Befehlsworten ein der Adresse entsprechendes Befehlswort entnimmt, wobei das Befehlswort in ein digitales Stellsignal umgewandelt und an ein Stellglied (3) weitergeleitet wird.

2. Verfahren nach Anspruch 1, dadurch gekennzeichnet, daß die Messung in periodischen Zeitabständen vorgenommen wird, wobei der Zeitabstand im Bereich von 1 ms bis 1000 s liegt.

3. Verfahren nach Anspruch 2, dadurch gekennzeichnet, daß das Verhältnis zwischen Zeitabstand und Nachstellzeit des Stellgliedes im Bereich von 1 ms bis 1000 s liegt.

4. Schaltungsanordnung zur Durchführung des Verfahrens nach Anspruch 1, dadurch gekennzeichnet, daß sie einen Regler (6) aufweist, der an seinem Eingang einen Analog - Digital - Wandler enthält, dem ein logischer Speicher (8) nachgeschaltet ist, der ein als Stellsignal dienendes Befehlswort ausgibt.

5. Schaltungsanordnung nach Anspruch 4, dadurch gekennzeichnet, daß dem logischen Speicher (8) ein Digital-Analog-Wandler nachgeschaltet ist, der das Befehlswort in ein analoges Stellsignal umwandelt.

6. Schaltungsanordnung nach einem oder mehreren der vorhergehenden Ansprüche, dadurch gekennzeichnet, daß sie einen Strommesser (2), einen Regler (6) und ein Stellglied (3) in einem einzigen Gehäuse enthält, welches in die elektrische Zuleitung des Heizleiters integriert ist.

FIG.1 a

FIG.1 b

```
         ┌──────────────────────┐
         │    Strommessung      │
         │       durch          │
         │     Heizleiter       │
         └──────────────────────┘
                    │
                    ▼
         ┌──────────────────────┐
         │     Generierung      │◄──┐
         │      ADR für         │   │
         │     Register         │   │
         └──────────────────────┘   │
                    │ S_H           │
                    ▼               │
         ┌──────────────────────┐   │
         │     Auslesen         │   │
         │     Stellwert        │   │
         └──────────────────────┘───┘
                    │ Y
                    ▼
         ┌──────────────────────┐
         │      Stellen         │
         │  Strom Heizleiter    │
         │   auf Sollwert       │
         └──────────────────────┘
```

FIG. 2